# NEUE EUROPÄISCHE PATENTSCHRIFT

(11) **EP 2 380 258 B2**
(45) Veröffentlichungstag und Bekanntmachung des Hinweises auf die Entscheidung über den Einspruch: **29.08.2018**
(45) Hinweis auf die Patenterteilung: 14.01.2015
(21) Anmeldenummer: 09760805.3
(22) Anmeldetag: 17.11.2009
(51) Int. Cl.: H02K 5/04

(54) **ELEKTRISCHE MASCHINE, INSBESONDERE WECHSELSTROMGENERATOR**
ELECTRICAL MACHINE, PARTICULARLY ALTERNATING CURRENT GENERATOR
MACHINE ÉLECTRIQUE, EN PARTICULIER GÉNÉRATRICE À COURANT ALTERNATIF

(30) Priorität: 19.12.2008 DE 102008054959
(43) Veröffentlichungstag der Anmeldung: 26.10.2011
(73) Patentinhaber: Robert Bosch GmbH, 70442 Stuttgart (DE)
(72) Erfinder: SEKERTZIS, Vassilios, 70439 Stuttgart (DE); RUDOLPH, Lars, 70469 Stuttgart (DE); HERBOLD, Klaus, 71679 Asperg (DE); WEBER, Gerlinde, 70771 Leinfelden-Echterdingen (DE); AMARAL, Daniel, Brasilien (BR)
(74) Vertreter: Steinbauer, Florian
(86) Internationale Anmeldenummer: PCT/EP2009/065299
(87) Internationale Veröffentlichungsnummer: WO 2010/069693

(56) Entgegenhaltungen:
- EP-A2- 1 551 092
- GB-A- 1 297 329
- US-A- 5 315 195
- US-A- 5 315 195
- US-A1- 2001 054 853
- US-A1- 2005 068 135
- US-B2- 7 348 391

## Beschreibung

### Stand der Technik

Aus der europäischen Patentanmeldung EP 155 1092 A2 ist ein Drehstromgenerator mit einer Schutzkappe bekannt, die einerseits mittels Schrauben an einer Verschaltungsplatte befestigt wird und andererseits mit Schnapphaken an einem Reglergehäuse zu befestigen ist.

Desweiteren ist aus unserem Hause eine Generatorbauart bekannt, die als sogenannte LIC-Generator bekannt ist. Dieser Generator wird weltweit vertrieben und weist eine Schutzkappe auf, die mittels Schnapphaken und mehreren Schrauben an einem Gleichrichter befestigt ist.

Demgegenüber besteht die Aufgabe, die Schnapphaken noch stabiler und weniger nachgiebig auszugestalten, als es bisher der Fall ist.

### Offenbarung der Erfindung

Mit der vorgeschlagenen Lösung wird angestrebt, dass eine Kraft zum Aufbiegen des Schnapphakens deutlich vergrößert ist und somit eine Haltesicherheit verbessert ist. Hierzu ist vorgesehen, dass der Biegebereich des Schnapphakens eine gekrümme Oberfläche aufweist. Bedingt durch diese gekrümmte Oberfläche wird beim Biegen ein mehrachsiger Spannungszustand erzeugt, der letztlich einen besonders hohen Widerstand gegen Aufbiegen bzw. Verbiegen des Biegebereichs verursacht. Gemäß einer weiteren Ausgestaltung der Erfindung ist vorgesehen, dass die gekrümmte Oberfläche rinnenförmig, d. h. vorzugsweise hohlzylindrisch oder gegebenenfalls winkelförmig ist. Durch derartige Gestaltungen der Oberfläche ergibt sich eine relativ geringe Kerbwirkung und damit eine hohe Haltbarkeit des Biegebereichs. Desweiteren ist vorgesehen, dass die Oberfläche auf der Seite gekrümmt ist, auf der sich eine hintergreifende Oberfläche des Schnapphakens befindet. Dies hat den Vorteil, dass sich bei nahezu nie vermeidbaren ungleichmäßigen Abkühlungsprozessen (Spritzgießen der Schutzkappe bei hoher Temperatur) der Schnapphaken nicht derartig ausrichtet, dass sich eine Auslenkung weg von der zu hintergreifenden Stelle ergibt. Es ergibt sich somit eine höhere Betriebssicherheit.

Gemäß einer weiteren Ausgestaltung der Erfindung ist vorgesehen, dass sich die gekrümmte Oberfläche über eine Bogenlänge zwischen 60 und 150° erstreckt.

Eine besonders raumsparende Gestaltung von Schnapphaken und Gegenstück, an dem sich der Schapphaken hält, ergibt sich dadurch, dass der Schnapphaken ein eine zylinderartige Form aufweisendes Gegenstück hintergreift.

Weist das Gegenstück eine Bolzenaufnahme auf, welche vorzugsweise ein Innengewinde hat, so ist einerseits eine kompakte raumsparende Befestigungsweise zusätzlich durch einen Sicherungsbolzen möglich, der beispielsweise als Schraube ausgeführt sein kann.

Es ist vorgesehen, dass die Schutzkappe auf der Bolzenaufnahme aufliegt und zwischen einem Bolzkopf und einem Gegenstück gehalten ist. Dadurch ist eine insgesamt kompakte Befestigungsweise möglich. Ist eine Auflagefläche der Schutzkappe ringsegmentförmig, so ergibt sich die Möglichkeit, durch einfach gestaltete Einsätze in einer Spritzgussform eine kostengünstige Gestaltung zu erzielen. Die Auflagefläche ist dabei die Fläche, auf der ein Schraubenbolzen bzw. ein Bolzenkopf mit dessen Auflagefläche auf der Schutzkappe aufliegt.

Gemäß einer weiteren Ausgestaltung der Erfindung ist vorgesehen, dass die hintergreifende Oberfläche des Schnapphakens und die Auflagefläche in Summe über höchstens 360 Winkelgrade erstreckt sind. Dies vermeidet komplizierte spritzgusstechnische Vorrichtungen (komplizierte Hinterschneidungen, die nur durch extrem teure Querschieber erreichbar sind) und ermöglicht andererseits eine einfache Gestaltung einer Spritzgussform in diesem Bereich durch Einsätze, deren Grundform zylindrisch ist.

### Kurze Beschreibungen der Zeichnungen

Die Erfindung wird im Folgenden beispielhaft anhand der Figuren näher erläutert: Es zeigen
Figur 1 einen Längsschnitt durch eine elektrische Maschine,
Figur 2 eine räumliche Ansicht auf eine Schutzkappe,
Figur 3 eine Draufsicht auf die Schutzkappe aus Figur 2,
Figur 4a einen Schnitt gemäß einer Markierung in Figur 2,
Figur 4b einen Schnitt gemäß einer Markierung in Figur 4a,
Figur 5 eine räumliche Ansicht der Bolzenaufnahme mit dem Gegenstück,
Figur 6 einen Teilschnitt durch die Bolzenaufnahme und die Schutzkappe mit einem Bolzen.

### Ausführungsformen der Erfindung

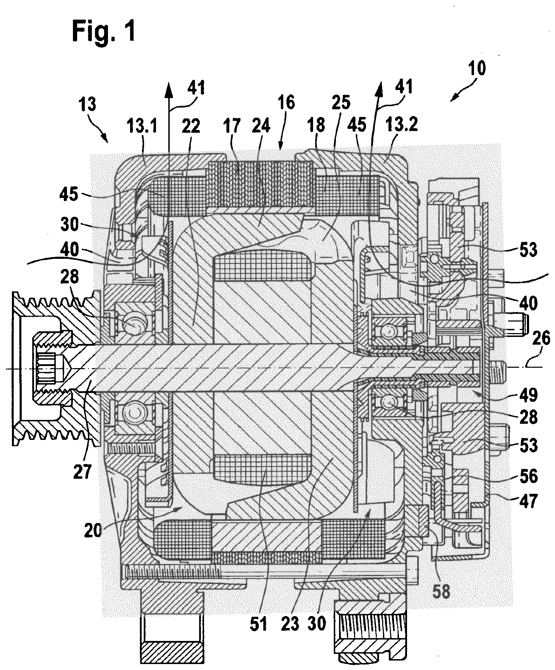

In Figur 1 ist ein Querschnitt durch eine elektrische Maschine 10, hier in der Ausführung als Generator bzw. Wechsel-, insbesondere Drehstromgenerator für Kraftfahrzeuge, dargestellt. Diese elektrische Maschine 10 weist u. a. ein zweiteiliges Gehäuse 13 auf, das aus einem ersten Lagerschild 13.1 und einem zweiten Lagerschild 13.2 besteht. Das Lagerschild 13.1 und das Lagerschild 13.2 nehmen in sich einen sogenannten Stator 16 auf, der einerseits aus einem im Wesentlichen kreisringförmigen Ständereisen 17 besteht, und in dessen nach radial innen gerichtete, sich axial erstreckende Nuten eine Ständerwicklung 18 eingelegt ist. Dieser ringförmige Stator 16 umgibt mit seiner radial nach innen gerichteten genuteten Oberfläche einen Rotor 20, der als Klauenpolläufer ausgebildet ist. Der Rotor 20 besteht u.a. aus zwei Klauenpolplatinen 22 und 23, an deren Außenumfang jeweils sich in axialer Richtung erstreckende Klauenpolfinger 24 und 25 angeordnet sind. Beide Klauenpolplatinen 22 und 23 sind im Rotor 20 derart angeordnet, dass deren sich in axialer Richtung erstreckende Klauenpolfinger 24 bzw. 25 am Umfang des Rotors 20 einander abwechseln. Es ergeben sich dadurch magnetisch erforderliche Zwischenräume zwischen den gegensinnig magnetisierten Klauenpolfingern 24 und 25, die als Klauenpolzwischenräume bezeichnet werden. Der Rotor 20 ist mittels einer Welle 27 und je einem auf je einer Rotorseite befindlichen Wälzlager 28 in den jeweiligen Lagerschilden 13.1 bzw. 13.2 drehbar gelagert.

Der Rotor 20 weist insgesamt zwei axiale Stirnflächen auf, an denen jeweils ein Lüfter 30 befestigt ist. Dieser Lüfter 30 besteht im Wesentlichen aus einem plattenförmigen bzw. scheibenförmigen Abschnitt, von dem Lüfterschaufeln in bekannter Weise ausgehen. Diese Lüfter 30 dienen dazu, über Öffnungen 40 in den Lagerschilden 13.1 und 13.2 einen Luftaustausch zwischen der Außenseite der elektrischen Maschine 10 und dem Innenraum der elektrischen Maschine 10 zu ermöglichen. Dazu sind die Öffnungen 40 im Wesentlichen an den axialen Enden der Lagerschilde 13.1 und 13.2 vorgesehen, über die mittels der Lüfter 30 Kühlluft in den Innenraum der elektrischen Maschine 10 eingesaugt wird. Diese Kühlluft wird durch die Rotation der Lüfter 30 nach radial außen beschleunigt, so dass diese durch den kühlluftdurchlässigen Wicklungsüberhang 45 hindurchtreten kann. Durch diesen Effekt wird der Wicklungsüberhang 45 gekühlt. Die Kühlluft nimmt nach dem Hindurchtreten durch den Wicklungsüberhang 45 bzw. nach dem Umströmen dieses Wicklungsüberhangs 45 einen Weg nach radial außen, durch hier in dieser Figur 1 nicht dargestellte Öffnungen.

In Figur 1 auf der rechten Seite befindet sich eine Schutzkappe 47, die verschiedene Bauteile vor Umgebungseinflüssen schützt. So deckt diese Schutzkappe 47 beispielsweise eine sogenannte Schleifringbaugruppe 49 ab, die dazu dient, eine Erregerwicklung 51 mit Erregerstrom zu versorgen. Um diese Schleifringbaugruppe 49 herum ist ein Kühlkörper 53 angeordnet, der hier als Pluskühlkörper wirkt. Als sogenannter Minuskühlkörper wirkt das Lagerschild 13.2. Zwischen dem Lagerschild 13.2 und dem Kühlkörper 53 ist eine Anschlussplatte 56 angeordnet, die dazu dient, im Lagerschild 13.2 angeordnete Minusdioden 58 und hier in dieser Darstellung nicht gezeigte Plusdioden im Kühlkörper 53 miteinander zu verbinden und somit eine an sich bekannte Brückenschaltung darzustellen.

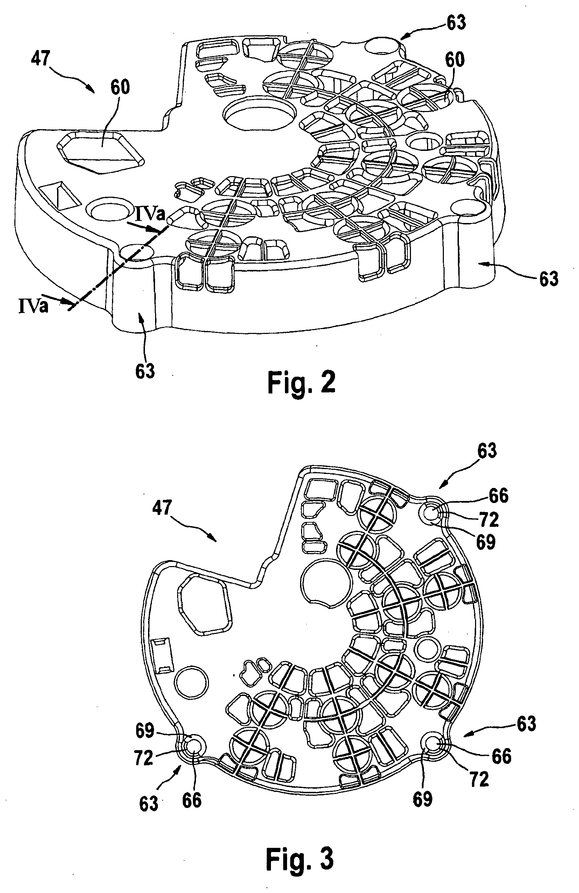

In Figur 2 ist eine räumliche Ansicht der Schutzkappe 47 dargestellt Diese Schutzkappe weist beispielsweise verschiedene Öffnungen 60 auf, die beispielsweise zur Kühlung von Dioden oder einem hier nicht dargestellten Regler dienen. Am Außenumfang dieser Schutzkappe sind in diesem Fall drei Befestigungsstellen 63 vorgesehen, die sowohl einen Schnapphaken umfassen, als auch die Möglichkeit, mittels eines Bolzenelements die Schutzkappe 47 an der elektrischen Maschine 10 zu befestigen. Diese Befestigungsstellen 63 sind äußerlich zunächst durch die nach außen gerichtete im Wesentlichen Zylindermantelform aufweisende Oberfläche erkennbar. Diese drei Befestigungsstellen 63 sind im Wesentlichen im Abstand von 90° zueinander angeordnet.

In Figur 3 ist eine Draufsicht auf die Schutzkappe 47 zu erkennen. Gut zu erkennen sind hier auch die Befestigungsstellen 63 in ihrer Draufsicht. Diese Befestigungsstellen, hier in axialer Ansicht, d. h. in der Ansicht, die in Bezug zur Figur 1 in Drehrichtung des Rotors 20 orientiert ist, zeigt drei Durchgangsstellen 66, durch die Bolzenelemente hindurchgesteckt werden können. Diese Bolzenelemente, vorzugsweise mit einem Bolzenkopf versehen, würden mit diesem Bolzenkopf auf einer Auflagefläche 69 zu liegen kommen. Diese Auflagefläche 69 dient dazu, mittels der Bolzenelemente die Schutzkappe 47 zu halten bzw. zu klemmen. In dieser Ansicht ist auch eine hintergreifende Oberfläche 72 erkennbar, auf die später noch detaillierter eingegangen werden wird. Auch dieser hintergreifende Oberfläche 72 ist ringsegment- bzw. kreisringsegmentförmig wie die Auflagefläche 69. Es ist vorgesehen, dass die Auflagefläche 69 und die hintergreifende Oberfläche 72 sich in Summe über höchstens 360 Winkelgrade erstrecken.

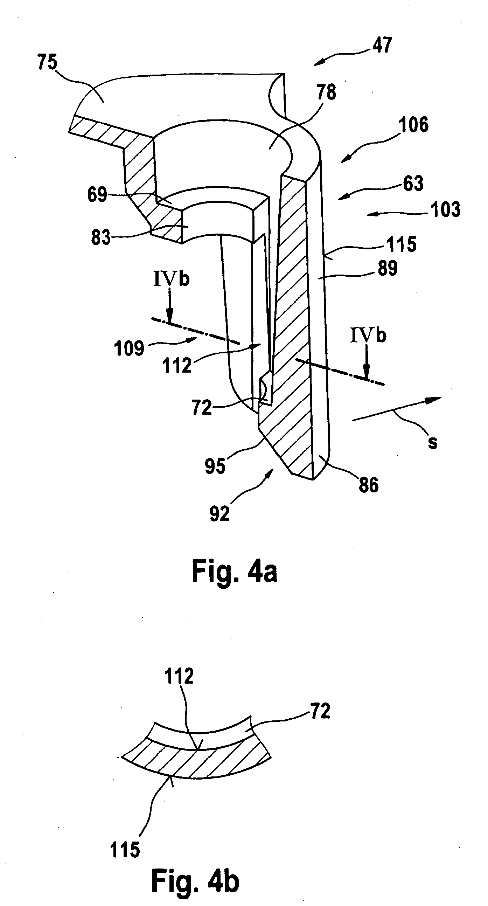

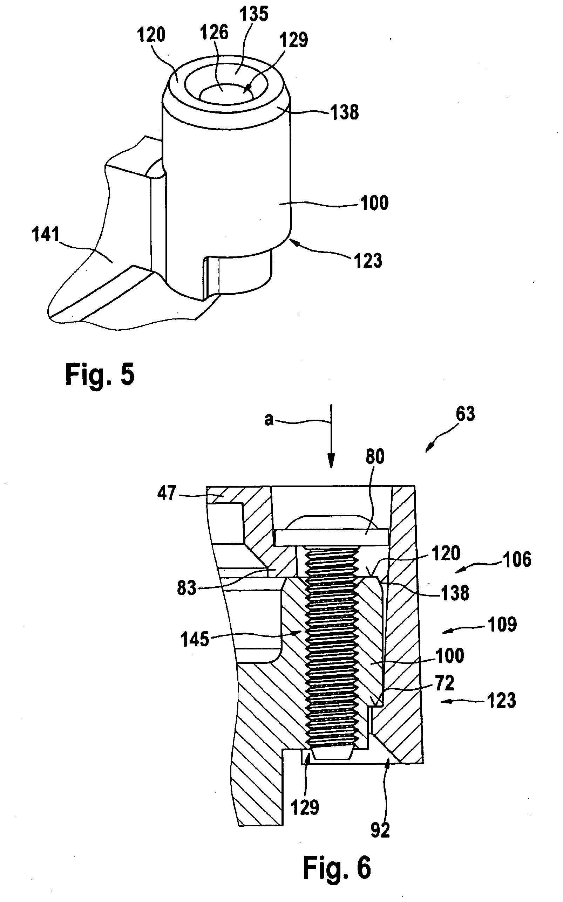

In Figur 4a ist ein Querschnitt durch die Befestigungsstelle 63 dargestellt. Diese Befestigungsstelle 63 ist hier lediglich schutzkappenseitig dargestellt. So ist in dieser Figur 4a die Auflagefläche 69 gut zu erkennen, die hier die Grundlage bzw. Auflage für einen Bolzenkopf 80, siehe beispielsweise Figur 6, darstellt. Des Weiteren ist auch die bereits aus Figur 3 bekannte hintergreifende Oberfläche 72 dargestellt und erkennbar. Die Schutzkappe 47 zeigt hier einen kleinen Bereich ihrer axialen Stirnfläche, von der ausgehend nach axial innen, d. h. in Richtung zur elektrischen Maschine 10 hin zunächst eine im Wesentlichen zylindrische Senkung angeordnet ist. Deren Boden ist durch die Auflagefläche 69 gebildet. Diese Auflagefläche 69 wiederum ist eine Oberfläche eines teilringförmigen Vorsprungs 83. Etwas weiter in axialer Richtung und somit auch etwas weiter von der axialen Stirnfläche 75 entfernt, befindet sich am unteren Ende und somit am unteren Ende 86 des Schutzkappenrandes ein Schnapphaken 92, auf dessen hintergreifende Oberfläche 72 bereits am Rande eingegangen wurde. Dieser Schnapphaken 92 weist eine Fügeschräge 95 auf, die dazu dient, die Schutzkappe 47 über ein Gegenstück 100 (Figur 5) schieben zu können. In Figur 4a ist mittels eines Pfeils, der mit dem kleinen Buchstaben s bezeichnet ist, die Richtung angegeben, in der der Schnapphaken 92 zum Fügen der Schutzkappe 47 auf das Gegenstück 100 bewegt werden muss. Der Schnapphaken 92 ist das Ende eines insgesamt als Schnappbereich 103 bezeichneten Bereich der Schutzkappe 47. Dieser Schnappbereich 103 besteht zunächst aus dem Schnapphaken 92 und dem Bereich, vor dem dieser Schnapphaken 92 ausgeht Dieser Bereich ist hier als Schnapphakenwurzel 106 bezeichnet. In Bezug zum Schnapphaken 92 ist diese Schnapphakenwurzel 106 der Bereich des Schnappbereichs 103, der sich in Richtung s besonders wenig, d. h. fast gar nicht, aufweitet. Diese Schnapphakenwurzel 106 befindet sich hier in etwa auf Höhe des teilringförmigen Vorsprungs 83. Zwischen dieser Schnapphakenwurzel 106 und dem Schnapphaken 92 befindet sich ein Biegebereich 109. Wie anhand der Figur 4a erkannt werden kann, ist der Biegebereich 109 derartig gestaltet, dass dieser eine gekrümmte Oberfläche 112 aufweist. Während die gekrümmte Oberfläche 112 auf der Seite des Biegebereichs 109 ist, auf der die hintergreifende Oberfläche 72 angeordnet ist, weist der Biegebereich 109 auch auf seiner Außenseite eine gekrümmte Oberfläche 115 auf. Diese Außenseite ist die Oberfläche, die auf der Seite des Biegebereichs 109 angeordnet ist, die von der hintergreifenden Oberfläche 72 abgewandt ist. Man könnte die gekrümmte Oberfläche 115 auch so definieren, dass diese auf der Seite des Biegebereichs 109 angeordnet ist, die der Schnapprichtung s zugewandt ist

Es ist somit eine elektrische Maschine 10, insbesondere Wechselstromgenerator, der beispielsweise als Drehstromgenerator ausgeführt sein kann, bekannt, mit vorzugsweise elektrischen Bauteilen, wie beispielsweise einer Brückenschaltung aus Plus- und Minusdioden (Gleichrichter), die vor einem Zugriff geschützt sind, wobei hierzu eine Schutzkappe 47 dient, die mittels zumindest eines Schnappbereichs 103 befestigt ist, wobei der Schnappbereich 103 einen Schnapphaken 92 mit einer Schnapphakenwurzel 106 aufweist, wobei zwischen dem Schnapphaken 92 und der Schnapphakenwurzel 106 ein Biegebereich 109 ist, der eine gekrümmte Oberfläche 112 bzw. 115 aufweist. Man kann es bereits aus Figur 4a erahnen und in Figur 4b genauer erkennen: Die gekrümmte Oberfläche 112 ist rinnenförmig und hier vorzugsweise und in diesem Beispiel auch so ausgeführt, hohlzylindrisch. Die gekrümmte Oberfläche 115 ist dagegen "tonnenförmig" bzw. zylindrisch (außenzylindrisch). Als alternative Ausführungsform könnte die Oberfläche 112 und auch die Oberfläche 115 winkelförmig ausgeführt sein. Wie auch der Figur 4b entnommen werden kann, ist der Biegebereich 109 auf der Seite gekrümmt, auf der sich eine hintergreifende Oberfläche 72 des Schnapphakens 92 befindet.

Es ist vorgesehen, dass die gekrümmte Oberfläche 112 eine Bogenlänge zwischen 60° und 150° aufweist.

In Figur 5 ist ein Gegenstück 100 dargestellt. Dieses Gegenstück 100 weist hier eine ringförmige Auflagefläche 120 auf, auf der der teilringförmige Vorsprung 83 im montierten Zustand zu liegen kommt, siehe auch Figur 6. Dieses Gegenstück 100 weist zumindest über einen Teil seines Körpers eine zylindrische Gestalt auf. Das Gegenstück 100 verfügt über einen Vorsprung 123, der zum Hintergreifen durch den Schnapphaken 92 dient, siehe auch Figur 6. Das Gegenstück 100 hat eine zentrale Bohrung bzw. eine zentrale Öffnung 126, die im Wesentlichen zylindrisch verläuft. Die zentrale Öffnung 126 verfügt des Weiteren über ein Gewinde 129. Zum leichteren Einführen eines Bolzenelements 132 verfügt die zentrale Öffnung 126 an ihrem oberen, dem teilringförmigen Vorsprung 83 zugewandten Ende über eine Einführschräge 135. An seinem Außenumfang weist dagegen das Gegenstück 100 eine Schräge 138 auf. Diese Schräge 138, siehe auch Figur 6, dient dazu, das Überstülpen der Schutzkappe 47 im Bereich der Schnapphaken 92 zu erleichtern. Im Übrigen ist vorgesehen, dass das Gegenstück 100 Teil einer sogenannten Verschaltungsplatte 141 ist. Eine Verschaltungsplatte dient dazu, die Brückenschaltung zwischen Plus- und Minusdioden zu verwirklichen. Diese Verschaltungsplatte 141 weist demzufolge üblicherweise auch in sich, d. h. in seinem Kunststoff eingebettet, diverse Leiter auf, die zur Herstellung der Brückenschaltung dienen. Der Vorsprung 123 verläuft im Übrigen in etwa über einen Bogen mit einer Länge von ca. 180° (gesehen in Achsrichtung der elektrischen Maschine).

In Figur 6 ist die Befestigungsstelle 63 in einem Schnitt dargestellt. Deutlich zu erkennen ist einerseits die Achsrichtung a, in die ein Bolzenelement 145 in das Gegenstück 100 bzw. dessen zentrale Öffnung 126 eingesetzt ist. Der Schnapphaken 92 hintergreift den Vorsprung 123 mit seiner hintergreifenden Oberfläche 72. Der teilringförmige Vorsprung 83 liegt auf der Auflagefläche 120 auf und ist durch einen Bolzenkopf 80 daran gehindert, sich von dieser Auflagefläche 120 zu lösen. Der Bolzenkopf 80 drückt den teilringförmigen Vorsprung 83 auf die Auflagefläche 120. Ein Profil der gekrümmten Oberfläche 112 bzw. 115 ist um die Achsrichtung a orientiert bzw. das Profil der gekrümmten Oberfläche orientiert sich in Achsrichtung a. Für den Fall, dass kein Bolzenelement 145 verwendet wird, kann auch formuliert werden, dass sich das Profil der gekrümmten Oberfläche 112 bzw. 115 in der Richtung orientiert, in der die Schutzkappe aufgesetzt wird. Das Profil ist dementsprechend in Aufsetzrichtung orientiert.

Aus den Figuren kann erkannt werden, dass der Schnapphaken 92 ein eine zylinderartige Form aufweisendes Gegenstück 100 hintergreift. Des Weiteren ist zu erkennen, dass das Gegenstück 100 eine Bolzenaufnahme in Gestalt einer zentralen Öffnung 126 aufweist, welche vorzugsweise ein Gewinde 129 (Innengewinde) aufweist. Die Schutzkappe 47 liegt auf dem Gegenstück (Bolzenaufnahme, Auflagefläche 120) auf und ist zwischen dem Bolzenkopf 80 und dem Gegenstück 100 gehalten.

Allgemein kann noch festgehalten werden, dass die Formgebung der Schutzkappe im Wesentlichen kreisförmig ist. Sie weist eine in etwa sektorartige Aussparung am Außenumfang auf (Figur 3, links oben) und wird an der Verschaltungsplatte 142 des Gleichrichters befestigt. Die Schutzkappe 47 weist mehrere Befestigungsstellen 63 auf und wird über mindestens drei dieser Befestigungsstellen 63 an der Verschaltungsplatte 141 befestigt. Die Anzahl der Befestigungen 63 von Schutzkappe 47 und Verschaltungsplatte 141, d. h. hier die Anzahl der Gegenstücke 100 stimmen überein. Die Befestigungsstellen 63 liegen an der Peripherie der Schutzkappe 47 und damit am Rand der Schutzkappe 47. Gleiches gilt für die Verschaltungsplatte 141, deren Gegenstück 100 ebenfalls an deren Außenumfang befestigt sind. Die Befestigungsstellen 63 der Schutzkappe 47 sind als Teil einer Schnappverbindung ausgebildet, so dass die Schutzkappe 47 über Schnapphaken 92 an der Verschaltungsplatte 141 des Gleichrichters befestigt wird. Diese Schnappverbindung ist mit mindestens einem Schnapphaken 92 versehen. Es könnten an jeder Befestigungsstelle 63 auch mehrere Schnapphaken befestigt sein. Die Befestigung der Schutzkappe 47 muss nicht zwangsläufig zusätzlich mittels eines Bolzenelements 45 erfolgen. Wie deutlich wird, hält die Schutzkappe 47 auch ohne Bolzenelement 145 nur mittels der Schnappverbindung am Gegenstück 100. Ohne Schrauben wird die Befestigung günstiger und zugleich der Materialverbrauch verringert. Damit sinkt auch das Gewicht des Generators bzw. der elektrischen Maschine. Die Montage der Schutzkappe 47 an der Verschaltungsplatte 141 bzw. am Gegenstück 100 bzw. den Gegenstücken 100 kann sehr schnell erfolgen.

## Patentansprüche

1. Elektrische Maschine, insbesondere Wechselstromgenerator, der beispielsweise als Drehstromgenerator ausgeführt sein kann, mit - vorzugsweise elektrischen - Bauteilen, die vor einem Zugriff geschützt sind, wobei hierzu eine Schutzkappe (47) dient, die mittels zumindest eines Schnappbereichs (103) befestigt ist, wobei der Schnappbereich (103) einen Schnapphaken (92) mit einer Schnapphakenwurzel (106) aufweist, wobei zwischen dem Schnapphaken (92) und der Schnapphakenwurzel (106) ein Biegebereich (109) ist, wobei der Biegebereich (109) eine gekrümmte Oberfläche (112, 115) aufweist und der Schnapphaken (92) ein eine zylinderartige Form aufweisendes Gegenstück (100) hintergreift, **dadurch gekennzeichnet, dass** das Gegenstück (100) eine zentrale Öffnung (126) aufweist, welche ein Innengewinde (129) aufweist.

2. Elektrische Maschine nach Anspruch 1, **dadurch gekennzeichnet, dass** die gekrümmte Oberfläche (112) rinnenförmig, vorzugsweise hohlzylindrisch, ist.

3. Elektrische Maschine nach Anspruch 2, **dadurch gekennzeichnet, dass** der Biegebereich (109) auf der Seite gekrümmt ist, auf der sich eine hintergreifende Oberfläche (72) des Schnapphakens (92) befindet.

4. Elektrische Maschine nach Anspruch 1 oder 2, **dadurch gekennzeichnet, dass** die gekrümmte Oberfläche (112, 115) eine Bogenlänge zwischen 60° und 150° aufweist.

5. Elektrische Maschine nach Anspruch 1, **dadurch gekennzeichnet, dass** die Schutzkappe (47) auf dem Gegenstück (100) aufliegt und zwischen einem Bolzenkopf (80) und dem Gegenstück (100) gehalten ist.

6. Elektrische Maschine nach einem der vorstehenden Ansprüche, **dadurch gekennzeichnet, dass** eine Auflagefläche (69) der Schutzkappe (47) ringsegmentförmig ist und die Auflagefläche (69) die Fläche ist, auf der ein Bolzenkopf (80) mit dessen Auflagefläche auf der Schutzkappe (47) aufliegt.

7. Elektrische Maschine nach Anspruch 6, **dadurch gekennzeichnet, dass** die hintergreifende Oberfläche (72) und die Auflagefläche (69) in Summe über höchstens 360 Winkelgrade erstreckt sind.

8. Elektrische Maschine, insbesondere Wechselstromgenerator, der beispielsweise als Drehstromgenerator ausgeführt sein kann, mit - vorzugsweise elektrischen - Bauteilen, die vor einem Zugriff geschützt sind, wobei hierzu eine Schutzkappe (47) dient, die mittels zumindest eines Schnappbereichs (103) befestigt ist, wobei der Schnappbereich (103) einen Schnapphaken (92) mit einer Schnapphakenwurzel (106) aufweist, wobei zwischen dem Schnapphaken (92) und der Schnapphakenwurzel (106) ein Biegebereich (109) ist, wobei der Biegebereich (109) eine gekrümmte Oberfläche (112, 115) aufweist und der Schnapphaken (92) ein eine zylinderartige Form aufweisendes Gegenstück (100) hintergreift, **dadurch gekennzeichnet, dass** die Schutzkappe (47) auf dem Gegenstück (100) aufliegt und zwischen einem Bolzenkopf (80) und dem Gegenstück (100) gehalten ist, wobei das Gegenstück (100) Teil einer Verschaltungsplatte (141) ist, die dazu dient eine Brückenschaltung zwischen Plus- und Minusdioden zu verwirklichen.

9. Elektrische Maschine nach Anspruch 8, **dadurch gekennzeichnet, dass** die gekrümmte Oberfläche (112) rinnenförmig, vorzugsweise hohlzylindrisch ist.

10. Elektrische Maschine nach Anspruch 9, **dadurch gekennzeichnet, dass** der Biegebereich (109) auf der Seite gekrümmt ist, auf der sich eine hintergreifende Oberfläche (72) des Schnapphakens (92) befindet.

11. Elektrische Maschine nach Anspruch 8 oder 9, **dadurch gekennzeichnet, dass** die gekrümmte Oberfläche (112, 115) eine Bogenlänge zwischen 60° und 150° aufweist.

12. Elektrische Maschine nach Anspruch 8, **dadurch gekennzeichnet, dass** das Gegenstück (100) eine zentrale Öffnung (126) aufweist, welche vorzugsweise ein Gewinde (129) aufweist.

13. Elektrische Maschine nach einem der vorstehenden Ansprüche 8 bis 12, **dadurch gekennzeichnet, dass** eine Auflagefläche (69) der Schutzkappe (47) ringsegmentförmig ist und die Auflagefläche (69) die Fläche ist, auf der ein Bolzenkopf (80) mit dessen Auflagefläche auf der Schutzkappe (47) aufliegt.

14. Elektrische Maschine nach Anspruch 13, **dadurch gekennzeichnet, dass** die hintergreifende Oberfläche (72) und die Auflagefläche (69) in Summe über höchstens 360 Winkelgrade erstreckt sind.

## Claims

1. Electrical machine, in particular an alternating current generator, which may, for example, be in the form of a polyphase generator, having - preferably electrical - components which are protected against access, with a protective cap (47) being used for this purpose, which is attached by means of at least one snap-action area (103), with the snap-action area (103) having a snap-action hook (92) with a snap-action hook root (106), with a bending area (109) between the snap-action hook (92) and the snap-action hook root (106) wherein the bending area (109) has a curved surface (112, 115) and the snap-action hook (92) engages behind a mating piece (100) which has a cylinder-like shape, **characterized in that** the mating piece (100) has a central opening (126), which has an internal thread (129).

2. Electrical machine according to Claim 1, **characterized in that** the curved surface (112) is in the form of a groove, preferably hollow-cylindrical.

3. Electrical machine according to Claim 2, **characterized in that** the bending area (109) is curved on the side on which a surface (72), which engages behind, of the snap-action hook (92) is located.

4. Electrical machine according to Claim 1 or 2, **characterized in that** the curved surfaces (112, 115) has an arc length between 60° and 150°.

5. Electrical machine according to Claim 1, **characterized in that** the protective cap (47) rests on the mating piece (100) and is held between a bolt head (80) and the mating piece (100).

6. Electrical machine according to one of the preceding claims, **characterized in that** a contact surface (69) of the protective cap (47) is in the form of a ring segment and the contact surface (69) is the surface on which a bolt head (80) rests with its bearing surface on the protective cap (47).

7. Electrical machine according to Claim 6, **characterized in that** the surface (72) which engages behind and the contact surface (69) in total extend over at most 360 angular degrees.

8. Electrical machine, in particular an alternating current generator, which may, for example, be in the form of a polyphase generator, having - preferably electrical - components which are protected against access, with a protective cap (47) being used for this purpose, which is attached by means of at least one snap-action area (103), with the snap-action area (103) having a snap-action hook (92) with a snap-action hook root (106), with a bending area (109) between the snap-action hook (92) and the snap-action hook root (106) wherein the bending area (109) has a curved surface (112, 115) and the snap-action hook (92) engages behind a mating piece (100) which has a cylinder-like shape, **characterized in that** the protective cap (47) rests on the mating piece (100) and is held between a bolt head (80) and the mating piece (100) wherein the mating piece (100) is part of a circuit board (141) serving to bridge between positive and negative diodes.

9. Electrical machine according to Claim 8, **characterized in that** the curved surface (112) is in the form of a groove, preferably hollow-cylindrical.

10. Electrical machine according to Claim 9, **characterized in that** the bending area (109) is curved on the side on which a surface (72), which engages behind, of the snap-action hook (92) is located.

11. Electrical machine according to Claim 8 or 9, **characterized in that** the curved surfaces (112, 115) has an arc length between 60° and 150°.

12. Electrical machine according to Claim 8, **characterized in that** the mating piece (100) has a central opening (126), which has an internal thread (129) .

13. Electrical machine according to one of the preceding claims 8 to 12, **characterized in that** a contact surface (69) of the protective cap (47) is in the form of a ring segment and the contact surface (69) is the surface on which a bolt head (80) rests with its bearing surface on the protective cap (47).

14. Electrical machine according to Claim 13, **characterized in that** the surface (72) which engages behind and the contact surface (69) in total extend over at most 360 angular degrees.

## Revendications

1. Machine électrique, en particulier générateur à courant alternatif, qui peut par exemple être réalisé sous forme d'alternateur à courant triphasé, comprenant des composants, de préférence électriques, qui sont protégés contre un accès, un couvercle de protection (47) étant utilisé à cet effet, lequel est fixé au moyen d'au moins une région d'encliquetage (103), la région d'encliquetage (103) comprenant un crochet d'encliquetage (92) pourvu d'une racine de crochet d'encliquetage (106), une région de flexion (109) étant prévue entre le crochet d'encliquetage (92) et la racine de crochet d'encliquetage (106), dans lequel que la région de flexion (109) comprend une surface courbe (112, 115) et que le crochet d'encliquetage (92) vient en prise par l'arrière avec une pièce conjuguée (100) présentant une forme de type cylindre, **caractérisée en ce que** la pièce conjuguée (100) comprend une ouverture centrale (126), laquelle comprend de préférence un filetage interne (129).

2. Machine électrique selon la revendication 1, **caractérisée en ce que** la surface courbe (112) est en forme de rainure, de préférence cylindrique creuse.

3. Machine électrique selon la revendication 2, **caractérisée en ce que** la région de flexion (109) est courbe du côté sur lequel se trouve une surface d'entrée en prise par l'arrière (72) du crochet d'encliquetage (92).

4. Machine électrique selon la revendication 1 ou 2, **caractérisée en ce que** la surface courbe (112, 115) présente une longueur d'arc entre 60° et 150°.

5. Machine électrique selon la revendication 1, **caractérisée en ce que** le couvercle de protection (47) repose sur la pièce conjuguée (100) et est maintenu entre une tête de boulon (80) et la pièce conjuguée (100).

6. Machine électrique selon l'une quelconque des revendications précédentes, **caractérisée en ce qu'**une surface d'appui (69) du couvercle de protection (47) est en forme de segment annulaire et la surface d'appui (69) est la surface sur laquelle une tête de boulon (80) repose avec sa surface d'appui sur le couvercle de protection (47) .

7. Machine électrique selon la revendication 6, **caractérisée en ce que** la surface d'entrée en prise par l'arrière (72) et la surface d'appui (69) s'étendent au total sur 360 degrés au plus.

8. Machine électrique, en particulier générateur à courant alternatif, qui peut par exemple être réalisé sous forme d'alternateur à courant triphasé, comprenant des composants, de préférence électriques, qui sont protégés contre un accès, un couvercle de protection (47) étant utilisé à cet effet, lequel est fixé au moyen d'au moins une région d'encliquetage (103), la région d'encliquetage (103) comprenant un crochet d'encliquetage (92) pourvu d'une racine de crochet d'encliquetage (106), une région de flexion (109) étant prévue entre le crochet d'encliquetage (92) et la racine de crochet d'encliquetage (106), dans lequel que la région de flexion (109) comprend une surface courbe (112, 115) et que le crochet d'encliquetage (92) vient en prise par l'arrière avec une pièce conjuguée (100) présentant une forme de type cylindre, **caractérisée en ce que** le couvercle de protection (47) repose sur la pièce conjuguée (100) et est maintenu entre une tête de boulon (80) et la pièce conjuguée (100), dans lequel la pièce conjuguée (100) faisant partie d'une carte de circuit imprimé (141) servant à établir un pont entre des diodes positives et négatives.

9. Machine électrique selon la revendication 8, **caractérisée en ce que** la surface courbe (112) est en forme de rainure, de préférence cylindrique creuse.

10. Machine électrique selon la revendication 9, **caractérisée en ce que** la région de flexion (109) est courbe du côté sur lequel se trouve une surface d'entrée en prise par l'arrière (72) du crochet d'encliquetage (92).

11. Machine électrique selon la revendication 8 ou 9, **caractérisée en ce que** la surface courbe (112, 115) présente une longueur d'arc entre 60° et 150°.

12. Machine électrique selon la revendication 8, **caractérisée en ce que** la pièce conjuguée (100) comprend une ouverture centrale (126), laquelle comprend de préférence un filetage interne (129).

13. Machine électrique selon l'une quelconque des revendications précédentes 8 à 12, **caractérisée en ce qu'**une surface d'appui (69) du couvercle de protection (47) est en forme de segment annulaire et la surface d'appui (69) est la surface sur laquelle une tête de boulon (80) repose avec sa surface d'appui sur le couvercle de protection (47) .

14. Machine électrique selon la revendication 13, **caractérisée en ce que** la surface d'entrée en prise par l'arrière (72) et la surface d'appui (69) s'étendent au total sur 360 degrés au plus.
